# EUROPEAN PATENT SPECIFICATION

(11) **EP 2 824 459 B1**
(45) Date of publication and mention of the grant of the patent: **15.02.2017**
(21) Application number: 13758277.1
(22) Date of filing: 22.02.2013
(51) Int. Cl.: G01P 13/04, G01P 5/10

(54) **FLUID MEASUREMENT APPARATUS**
FLÜSSIGKEITSMESSVORRICHTUNG
APPAREIL DE MESURE DE FLUIDE

(30) Priority: 07.03.2012 JP 2012050899
(43) Date of publication of application: 14.01.2015
(73) Proprietor: Omron Corporation, Kyoto-shi, Kyoto 600-8530 (JP)
(72) Inventor: UEDA, Naotsugu, Kyoto-shi Kyoto 600-8530 (JP); YAMAMOTO, Katsuyuki, Kyoto-shi Kyoto 600-8530 (JP)
(74) Representative: Kilian Kilian & Partner
(86) International application number: PCT/JP2013/054583
(87) International publication number: WO 2013/133048

(56) References cited:
- EP-A1- 2 236 996
- EP-A2- 1 568 999
- JP-A- H04 295 768
- JP-A- S60 166 868
- US-A- 3 213 682

## Description

### TECHNICAL FIELD

The present invention relates to a fluid measurement apparatus that detects at least one of a velocity and a direction of a fluid.

### BACKGROUND ART

Conventionally, a detector that detects at least one of the velocity and the direction of the fluid by contacting directly with the fluid of a measurement target is provided in a fluid measurement apparatus. The detector includes a heater and a temperature sensor, and the temperature sensor measures a change in temperature distribution due to movement of the fluid heated by the heater, thereby detecting at least one of the velocity and the direction of the fluid.

For example, in an anemoscope disclosed in Patent Document 1, a micro flow sensor that detects the velocity of air flowing between two current plates is arranged in an inside surface of one of the current plates. Therefore, the air in which disturbance of an air flow is constrained flows in the micro flow sensor.

As illustrated in Figs. 14(a) and 14(b), in a fluid detection device 800 disclosed in Patent Document 2, two fluid detection elements 802a and 802b are arranged in one or both opposed surfaces of two fluid guide plates 801a and 801 b opposed to each other with a predetermined gap, and a flow rate of the fluid flowing between the opposed surfaces is detected.

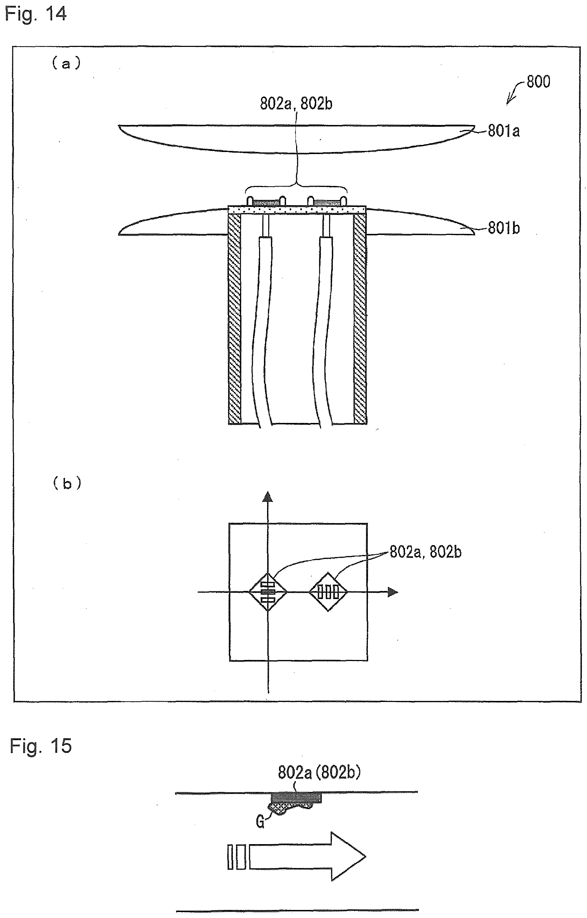

At this point, the target fluid in which the flow rate is detected is air as described in Patent Document 1, and dust is included in the fluid depending on an environment. For example, in the fluid detection device 800 of Patent Document 2, as illustrated in Fig. 15, dust G included in the fluid adheres to fluid detection element 802a (802b) that detects the flow rate, and possibly the fluid detection element 802a (802b) is contaminated (Fig. 15). When the fluid detection element 802a (802b) is contaminated, detection performance degradation such as output sensitivity abnormality is possibly generated. The problem is generated in both the configuration of Patent Documents 1 and 2.

Therefore, as illustrated in Fig. 17, Patent Document 3 discloses a flow measuring device 700 including centrifugal separation chambers 702a and 702b that apply a centrifugal force to the dust flowing from introduction channels 701a and 701b. According to Patent Document 3, the dust to which the centrifugal force is applied in the centrifugal separation chambers 702a and 702b flows along wall surfaces of the centrifugal separation chambers 702a and 702b, and only the clean fluid that does not include the dust flows through a detection element 703. Accordingly, the detection element 703 has a structure which the dust hardly adheres to or is hardly deposited on.

JP S60 166868 A relates to an apparatus for measuring wind direction and velocity, wherein the apparatus comprises a mesh wire configured such that fluid can flow in and out of the apparatus in a whole azimuthal direction, and an air stream flowing into the apparatus is divided into a main stream, which passes around a conductor, whereby a centrifugal force is exerted on the main stream, and a side stream which passes a plurality of thermocouples.

Further prior art is disclosed in EP 1 568 999 A2.

### PRIOR ART DOCUMENTS

### PATENT DOCUMENTS

Patent Document 1: Japanese Unexamined Patent Publication No. 2011-128105
Patent Document 2: Japanese Unexamined Patent Publication No. 4-295768
Patent Document 3: Japanese Unexamined Patent Publication No.

### SUMMARY OF THE INVENTION

### PROBLEMS TO BE SOLVED BY THE INVENTION

In the fluid measurement apparatus that measures the fluid velocity, sometimes at least one of the velocity and the direction of the fluid is desirably detected irrespective of an influence of a fluid flowing direction due to the detection target fluid. For example, in a general air environment, at least one of the velocity and the direction of the air flow (wind) is acquired to monitor a ventilation state and amenity of the air.

In the configurations disclosed in Patent Documents 1 and 2, the velocity and the direction of the fluid can be detected in a whole azimuth. However, as described above, there is the problem in that the dust adheres to and is deposition on the detector (a fluid detection element and a micro flow sensor). On the other hand, Patent Document 3 has the structure in which the dust hardly adheres to or is hardly deposited on the detector (detection element). However, the velocity and the direction of the fluid cannot be detected in the whole azimuth. This is because the flow measuring device of Patent Document 3 includes only two introduction channels and the fluid flows only in two directions.

The present invention has been made in view of the above problems, and an object of the invention is to provide a fluid measurement apparatus that can detect at least one of the velocity and the direction of the fluid irrespective of the influence of the fluid flowing direction and can constrain the dust in the fluid from adhering to the detector.

### MEANS FOR SOLVING THE PROBLEM

The object is achieved by a fluid measurement apparatus according to claim 1.

Further preferred embodiments of the invention are defined by the dependent claims.

In accordance with one aspect, a fluid measurement apparatus includes: a detector configured to detect at least one of a fluid velocity and a fluid direction by contacting with the fluid; an inflow and outflow unit provided on a circumference of a circle having a center on a predetermined center axis, the fluid flowing in the inflow and outflow unit from an outside of the fluid measurement apparatus and flowing out from the inflow and outflow unit to the outside of the fluid measurement apparatus; a centrifugal separation channel including a ring channel centered on the center axis, and configured to communicate with the inflow and outflow unit by a connection unit provided on a circumference parallel to the ring channel; and a detector channel configured to communicate with the centrifugal separation channel by a connection unit provided on a circumference parallel to the centrifugal separation channel, the detector being provided at a position passing through the center axis.

### EFFECT OF THE INVENTION

As described above, the fluid measurement apparatus of the invention includes: the detector configured to detect at least one of the fluid velocity and the fluid direction by contacting with the fluid; the inflow and outflow unit provided on the circumference of the circle having the center on the predetermined center axis, the fluid flowing in the inflow and outflow unit from the outside of the fluid measurement apparatus and flowing out from the inflow and outflow unit to the outside of the fluid measurement apparatus; the centrifugal separation channel including the ring channel centered on the center axis, and configured to communicate with the inflow and outflow unit by the connection unit provided on the circumference parallel to the ring channel; and the detector channel configured to communicate with the centrifugal separation channel by the connection unit provided on the circumference parallel to the centrifugal separation channel, the detector being provided at the position passing through the center axis.

Therefore, advantageously at least one of the velocity and the direction of the fluid can be detected irrespective of the influence of the fluid flowing direction, and the dust in the fluid can be constrained from adhering to the detector.

### BRIEF DESCRIPTION OF THE DRAWINGS

Figs. 1(a) and 1(b) are sectional side views passing through a center of a fluid measurement apparatus according to a first embodiment, Fig. 1(a) is a front view illustrating the section of the fluid measurement apparatus, and Fig. 1(b) is a perspective view illustrating the section of the fluid measurement apparatus.
Fig. 2(a) is a perspective view of a fluid measurement apparatus of the first embodiment, Fig. 2(b) is an exploded view of the fluid measurement apparatus, and Fig. 2(c) is a view illustrating a configuration of a detector included in the fluid measurement apparatus.
Fig. 3(a) is a sectional view taken on a broken line A-A' in Fig. 2(a), and Fig. 3(b) is a sectional view taken on a broken line B-B' in Fig. 2(a).
Fig. 4 is an enlarged view illustrating a neighborhood of a detector channel unit in the fluid measurement apparatus of the first embodiment.
Fig. 5 is an enlarged view illustrating a neighborhood of a connection unit between a centrifugal separation channel unit and a bottom channel unit in the fluid measurement apparatus of the first embodiment.
Fig. 6 is a graph illustrating an example of a relationship between a velocity of a fluid contacting with a detection element and an output voltage of the detection element.
Fig. 7 is a schematic diagram illustrating a modification of the fluid measurement apparatus of the first embodiment.
Fig. 8 is a schematic diagram illustrating a configuration of another modification of the fluid measurement apparatus of the first embodiment.
Fig. 9(a) is a schematic diagram illustrating a configuration of still another modification of the fluid measurement apparatus of the first embodiment, and Fig. 9(b) is a sectional view taken on a broken line C-C' in Fig. 9(a).
Fig. 10 is a block diagram illustrating a configuration of a signal processing circuit formed in the fluid measurement apparatus of the first embodiment.
Figs. 11 (a) and 11 (b) are views illustrating a configuration of a detection element.
Fig. 12 is a schematic diagram of a fluid measurement apparatus according to a second embodiment.
Figs. 13(a) and 13(b) are schematic diagrams of a fluid measurement apparatus according to a third embodiment, and Fig. 13(c) is a schematic diagram of a fluid measurement apparatus of a reference.
Fig. 14(a) is a view illustrating a configuration of a conventional fluid measurement apparatus, and Fig. 14(b) is a view illustrating an arrangement of a detection element in the conventional fluid measurement apparatus.
Fig. 15 is a schematic diagram illustrating a neighborhood of the detection element in the conventional fluid measurement apparatus.
Figs. 16(a) and 16(b) are schematic diagrams illustrating the neighborhood of the detection element in the conventional fluid measurement apparatus.

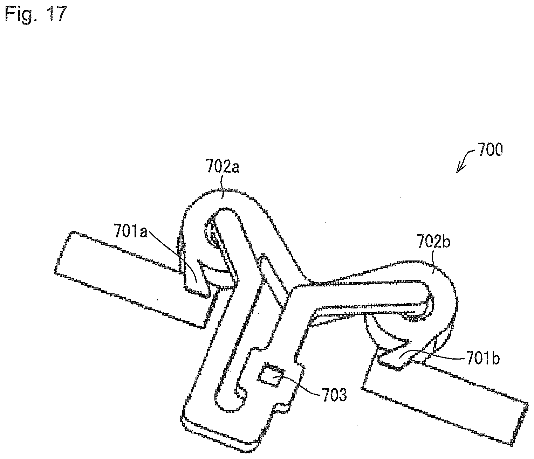

Fig. 17 is a view illustrating a configuration of another conventional fluid measurement apparatus.

### MODES FOR CARRYING OUT THE INVENTION

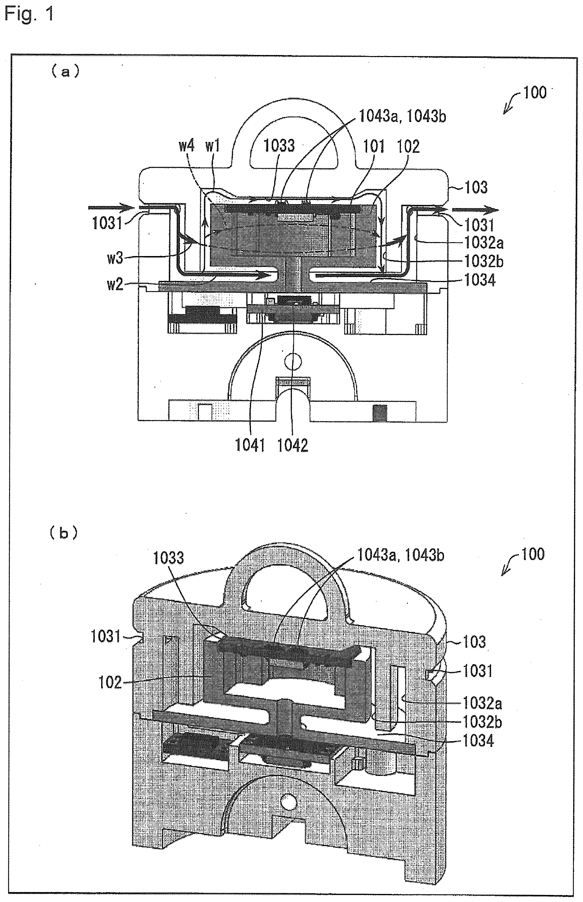

Hereinafter, an exemplary embodiment of the invention will be described in detail with reference to Figs. 1 to 13. Unless otherwise noted, the scope of the invention is not limited to dimensions, a material, a shape, and a relative arrangement of a component described in each embodiment, but those are described only by way of example.

### [First embodiment]

### (Configuration of fluid measurement apparatus)

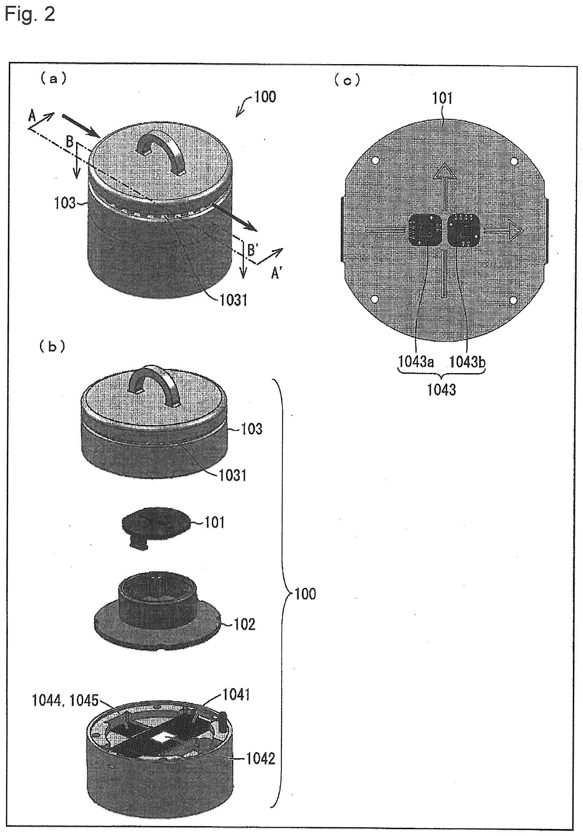

A configuration of a fluid measurement apparatus 100 according to a first embodiment will be described with reference to Figs. 2(a) to 2(c).

Fig. 2(a) is a perspective view of the fluid measurement apparatus 100, and Fig. 2(b) is an exploded view of the fluid measurement apparatus 100.

As illustrated in Fig. 2(a), the fluid measurement apparatus 100 having a substantially cylindrical outline includes an inflow and outflow unit 1031 in a whole azimuthal direction of a side surface thereof. A fluid flows in the fluid measurement apparatus 100 from an outside (external environment) through the inflow and outflow unit 1031, and the fluid flows out from the fluid measurement apparatus 100 to the outside.

As illustrated in Fig. 2(b), the fluid measurement apparatus 100 includes a detection element board 101 mounted on a detection element board mounting unit 102 and a control board 1041.

An arithmetic unit 1042, a temperature and humidity sensor 1044 (temperature detector/humidity detector), and azimuth sensor 1045 (azimuth detector) are provided on the control board 1041. The temperature and humidity sensor 1044 is an element that detects temperature and humidity of the fluid, and the azimuth sensor 1045 (digital compass) is an element that detects absolute azimuths of the east, west, north, and south.

The temperature and humidity sensor 1044 that detects the temperature and the humidity is provided in the first embodiment. Alternatively, a temperature sensor that detects only the temperature may be provided or a humidity sensor that detects only the humidity may be provided.

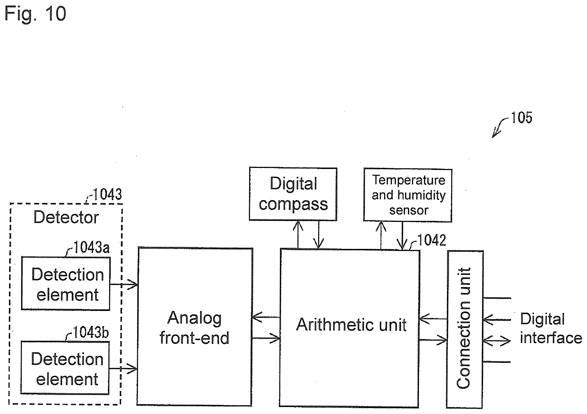

The arithmetic unit 1042 is electrically connected to a detector 1043, the temperature and humidity sensor 1044, and the azimuth sensor 1045 to form a signal processing circuit 105 (see Fig. 10).

As illustrated in Fig. 2(c), the detector 1043 is arranged on the detection element board 101. The detector 1043 includes two detection elements 1043a and 1043b (detection element unit). Each of the detection elements 1043a and 1043b has a detection axis on which a flow rate is detected in one direction of the fluid contacting thereto. The detection elements 1043a and 1043b are arranged on the detection element board 101 while the detection axes thereof are orthogonal to each other. The velocity and the direction of the fluid can be seen from flow rate components that are detected in the directions of the detection axes by the detection elements 1043a and 1043b.

Accordingly, the fluid measurement apparatus 100 of the invention can be said to be an anemometer. The anemometer (fluid measurement apparatus 100) includes an inflow unit (inflow and outflow unit 1031) that introduces a flow from a whole circumference direction and a flow rate detection element (detector 1043) that has sensitivity to at least a biaxial direction in order to detect a wind direction, and an outflow unit (inflow and outflow unit 1031) is identical to the inflow unit.

Figs. 1(a) and 1(b) are sectional side views passing through a center of the fluid measurement apparatus 100. Fig. 1 (a) is a front view illustrating a section of the fluid measurement apparatus 100, and Fig. 1(b) is a perspective view illustrating the section of the fluid measurement apparatus 100.

As indicated by arrows in Fig. 1(a), a channel for the fluid flowing in from the inflow and outflow unit 1031 is formed in the fluid measurement apparatus 100. The channel includes the inflow and outflow unit 1031, centrifugal separation channel units 1032a and 1032b, a detector channel unit 1033, and a bottom channel unit 1034.

As illustrated in Figs. 1(a) and 1(b), the centrifugal separation channel unit (centrifugal separation channel) 1032a is formed in an upper structure 103. The centrifugal separation channel unit (centrifugal separation channel) 1032b is formed between the upper structure 103 and a side surface of the detection element board mounting unit 102. The detector channel unit 1033 is formed between the upper structure 103 and the side surface of the detection element board mounting unit 102.

The inflow and outflow unit 1031 is formed in a whole azimuthal direction in the side surface of the cylindrical fluid measurement apparatus 100. In the inflow and outflow unit 1031, plural openings may be provided at equal intervals in the azimuthal direction, or a predetermined number of columns may be provided in a slit communicating in the whole azimuthal direction.

Each of the centrifugal separation channel units 1032a and 1032b is a ring-like channel that is formed in a gap with two coaxial cylinders having different diameters as an inside surface and an outside surface. The outside surface and the inside surface have a center axis that passes perpendicularly through the detector 1043 (detection elements 1043a and 1043b). The ring-like diameter of the centrifugal separation channel unit 1032b is smaller than that of the centrifugal separation channel unit 1032a, and the centrifugal separation channel unit 1032b is formed inside the centrifugal separation channel unit 1032a so as to be parallel with the centrifugal separation channel unit 1032a.

In an upper region of the outside surface of the centrifugal separation channel unit 1032a, the centrifugal separation channel unit 1032a communicates with the inflow and outflow unit 1031 in the whole azimuthal direction. In a lower region of the outside surface of the centrifugal separation channel unit 1032b, the centrifugal separation channel unit 1032b communicates with the lower region of the inside surface of the centrifugal separation channel unit 1032a in the whole azimuthal direction. The detector channel unit 1033 communicates with the upper region of the inside surface of the centrifugal separation channel unit 1032b in the whole azimuthal direction.

That is, the fluid measurement apparatus 100 can also be said to include an internal cylindrical channel (centrifugal separation channel units 1032a and 1032b) that is formed perpendicular to the inflow direction of the fluid and an internal channel structure in which the inflow is three-dimensionally split using the outside wall surface of the internal cylindrical channel and is partially introduced to the detector 1043.

The fluid measurement apparatus 100 can also be said to include an internal channel structure in which the inflow split using the outside wall surface of the internal cylindrical channel is further split using the inside wall surface of the internal cylindrical channel and is partially introduced to the detector 1043.

In the lower regions of the centrifugal separation channel units 1032a and 1032b, the bottom channel unit 1034 communicates with the centrifugal separation channel units 1032a and 1032b in the whole azimuthal direction.

Thus, the fluid can flow in and out from the inflow and outflow unit 1031 in the whole azimuthal direction.

The fluid measurement apparatus 100 includes the centrifugal separation channel unit 1032a including a cylindrical channel that communicates with the inflow and outflow unit 1031 in the whole azimuthal direction. The fluid flowing in the centrifugal separation channel unit 1032a from the flowing inflow and outflow unit 1031 returns partially to the centrifugal separation channel unit 1032a through the detector channel unit 1033 and flows out from the inflow and outflow unit 1031.

In the fluid measurement apparatus 100, the inflow and outflow unit 1031 and the centrifugal separation channel unit 1032a have symmetrical structures in the whole azimuthal direction with respect to the center axis passing through the detector 1043. Accordingly, the fluid can be measured under the same condition at the whole azimuth. The fluid flowing in from the inflow and outflow unit 1031 in any azimuthal direction contacts partially with the detector 1043 through the centrifugal separation channel units 1032a and 1032b and the detector channel unit 1033. Accordingly, the detector 1043 can detect the velocity and the direction of the fluid in the whole azimuthal direction.

The fluid flowing in the centrifugal separation channel unit 1032b flows partially in the detector channel unit 1033. Therefore, an amount of fluid flowing in the detector channel unit 1033 depends on a size of a conduction region between the centrifugal separation channel unit 1032b and the detector channel unit 1033. On the other hand, in the detection elements 1043a and 1043b, a velocity range where the velocity of the fluid can accurately be measured is fixed according to specifications. According to the configuration of the fluid measurement apparatus 100, using the same detection elements 1043a and 1043b, various velocity states of the external fluid can be dealt with by properly setting the size of the conduction region between the centrifugal separation channel unit 1032b and the detector channel unit 1033.

### (Channel and flow of fluid)

The channel and the flow of the fluid in the fluid measurement apparatus 100 will be described below with reference to Figs. 1(a) and 1(b), 3(a) and 3(b), and 4.

The fluid flows in the fluid measurement apparatus 100 while constituting three flows w1 to w3 indicated by the arrows in Fig. 1 (a). In the first flow w1, the fluid proceeds sequentially through the inflow and outflow unit 1031, the centrifugal separation channel unit 1032a, the centrifugal separation channel unit 1032b, the detector channel unit 1033, the centrifugal separation channel unit 1032b, the centrifugal separation channel unit 1032a, and the inflow and outflow unit 1031. In the second flow w2, the fluid proceeds sequentially through the inflow and outflow unit 1031, the centrifugal separation channel unit 1032a, the bottom channel unit 1034, the centrifugal separation channel unit 1032a, and the inflow and outflow unit 1031. In the third flow w3, the fluid proceeds sequentially through the inflow and outflow unit 1031, the centrifugal separation channel unit 1032a, and the inflow and outflow unit 1031. In the fourth flow w4, the fluid proceeds sequentially through the inflow and outflow unit 1031, the centrifugal separation channel units 1032a and 1032b, and the inflow and outflow unit 1031. In other words, part of the fluid flowing in the centrifugal separation channel unit 1032a from the inflow and outflow unit 1031 passes through the centrifugal separation channel unit 1032b and the detector channel unit 1033, passes through the centrifugal separation channel unit 1032b again, returns to the centrifugal separation channel unit 1032a, and flows out from the inflow and outflow unit 1031 (flow w1). On the other hand, the remaining fluid flows out from the inflow and outflow unit 1031 through the centrifugal separation channel units 1032a and 1032b and the bottom channel unit 1034 (flows w2, w3, and w4).

The flows w1, w2, and w3 of the fluid in the fluid measurement apparatus 100 will be described in order.

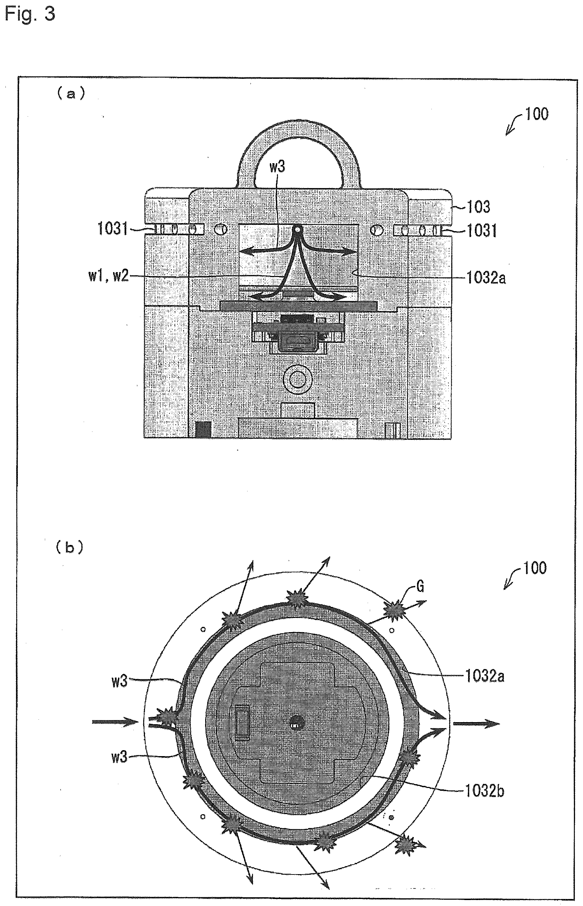

Fig. 3(a) is a sectional view taken on a broken line A-A' in Fig. 2(a). Fig. 3(b) is a sectional view taken on a broken line B-B' in Fig. 2(a).

The fluid flowing in from the inflow and outflow unit 1031 flows in the centrifugal separation channel unit 1032a.

As illustrated in Fig. 3(a), that fluid flowing in the centrifugal separation channel unit 1032a flows horizontally (flow w3) while flowing perpendicularly downward in the centrifugal separation channel unit 1032a (flow w1 and w2). Although the fluid actually has both the flow rate component in the perpendicularly downward direction and the flow rate component in the horizontal direction, the fluid flowing perpendicularly downward and the fluid flowing horizontally are considered for the sake of convenience.

As illustrated in Fig. 3(b), the fluid flowing perpendicularly downward (w1 and w2) reaches the connection unit between the centrifugal separation channel unit 1032a and the centrifugal separation channel unit 1032b and the bottom channel unit 1034 through the centrifugal separation channel unit 1032a.

On the other hand, the fluid flowing horizontally (w3) flows along the circumferential direction of the ring shape of the centrifugal separation channel unit 1032a. Therefore, dust G existing in the fluid is subjected to a centrifugal force toward the outside of the ring, namely, the outside surface direction of the centrifugal separation channel unit 1032a. The dust G subjected to the centrifugal force is discharged from the inflow and outflow unit 1031 while flowing near the outside surface. Accordingly, the dust included in the fluid decreases (effect A).

Actually the fluid has both the flow rate component in the perpendicularly downward direction and the flow rate component in the horizontal direction. Therefore, the fluid flows horizontally while flowing perpendicularly downward in the centrifugal separation channel unit 1032a. Accordingly, the dust in the fluid decreases by the effect A while the fluid passes through the centrifugal separation channel unit 1032a.

The flow rate direction of the fluid in which the dust decreases changes when the fluid flows in the centrifugal separation channel unit 1032b or the bottom channel unit 1034 from the centrifugal separation channel unit 1032a. The fluid having the large flow rate component in the perpendicularly upward direction flows in the centrifugal separation channel unit 1032b (flow w1). On the other hand, the fluid having the large flow rate component in the horizontal direction flows in the bottom channel unit 1034 (flow w2).

The fluid passing through the bottom channel unit 1034 (flow w2) flows directly out from the inflow and outflow unit 1031 through the centrifugal separation channel unit 1032a.

On the other hand, in the connection unit between the centrifugal separation channel units 1032a and 1032b, an inertia force, namely, a downward force acts on the dust in the fluid flowing in the centrifugal separation channel unit 1032b from the centrifugal separation channel unit 1032a (w1) by the change of the flow rate direction from the downward direction to the upward direction. Therefore, the dust flows easily in the bottom channel unit 1034, and flows hardly in the centrifugal separation channel unit 1032b. Accordingly, the dust included in the fluid flowing through the centrifugal separation channel unit 1032b (flow w1) decreases (effect B).

Part of the fluid flowing in the centrifugal separation channel unit 1032b (flow w1) constitutes the fluid flowing in the centrifugal separation channel unit 1032a (flow w4), and the remaining fluid flows in the detector channel unit 1033.

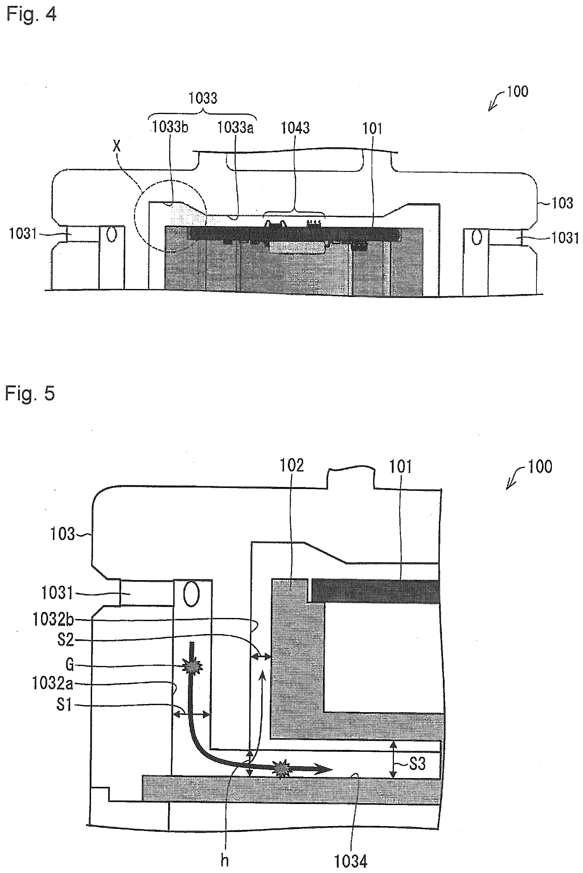

Fig. 4 is an enlarged view illustrating a neighborhood of the detector channel unit 1033. As illustrated in Fig. 4, the detector channel unit 1033 includes a disc-shaped central portion 1033a centered on the detector 1043 and a peripheral portion 1033b connected to the centrifugal separation channel unit 1032b.

At this point, as indicated by a broken line X in Fig. 4, a channel area of the detector channel unit 1033 is narrowed from the peripheral portion 1033b toward the central portion 1033a. Therefore, the flow is expected to be stabilized near the detector 1043.

The fluid flowing in the detector channel unit 1033 contacts with the detector 1043. At this point, in the fluid contacting with the detector 1043, the dust decreases by the effects A and B. Accordingly, generation of a fluid velocity detection error caused by adhesion of the dust to the detector 1043 can be constrained.

The fluid contacting with the detector 1043 flows out from the inflow and outflow unit 1031 through the centrifugal separation channel units 1032b and 1032a.

### [Effect]

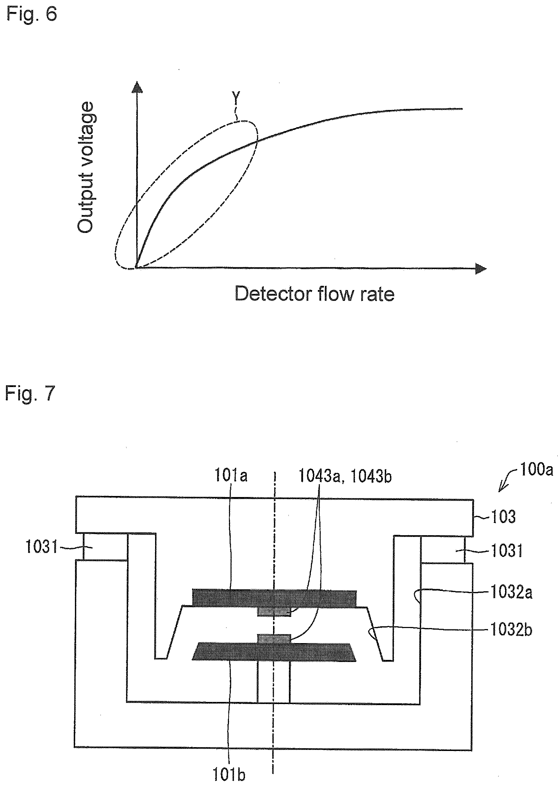

Effects except the effects A and B by virtue of the configuration of the fluid measurement apparatus 100 will be described with reference to Figs. 5 and 6.

Fig. 5 is an enlarged view illustrating the neighborhood of the connection unit between the centrifugal separation channel units 1032a and 1032b and the bottom channel unit 1034 in the fluid measurement apparatus 100.

Because of the structure of the connection unit, the downward flow in the centrifugal separation channel unit 1032a changes to the upward flow in the centrifugal separation channel unit 1032b. Therefore, the downward inertia force acts on the dust in the fluid flowing in the centrifugal separation channel unit 1032b from the centrifugal separation channel unit 1032a. Particularly, when h is lower than a level of the bottom channel unit 1034, the inertia force acts on the dust G passing through the connection unit, thereby decreasing the dust G flowing in the centrifugal separation channel unit 1032b.

This is because the decreased h generates the large change in flow rate in the narrow region in the fluid flowing in the centrifugal separation channel unit 1032b from the centrifugal separation channel unit 1032a. As a result, because the large inertia force acts on the dust G in the fluid, the dust G flows easily in the bottom channel unit 1034, and flows hardly in the centrifugal separation channel unit 1032b.

The detector 1043 includes the two detection elements 1043a and 1043b that detect the flow rate as a voltage value. Generally a flow rate region having high measurement accuracy exists in the detection elements 1043a and 1043b.

Fig. 6 is a graph illustrating an example of a relationship between the velocity (flow rate) of the fluid contacting with each of the detection elements 1043a and 1043b and an output voltage of each of the detection elements 1043a and 1043b. Referring to Fig. 6, in a region having a large slope (a region surrounded by a broken line Y), the detection accuracy of the flow rate is high because the output voltage changes largely with respect to the change in flow rate. On the other hand, in a region having a small slope, the detection accuracy of the flow rate is low because the output voltage does not change largely with respect to the change in flow rate.

Desirably the velocity of the fluid contacting with each of the detection elements 1043a and 1043b is included in the region where the detection accuracy of the flow rate is high, namely, an optimum flow rate sensitive region. However, various velocities of the fluids contact with the detection elements 1043a and 1043b depending on the flow rate of the external environment.

Depending on the flow rate of the external environment, sometimes the velocity of the fluid contacting with each of the detection elements 1043a and 1043b is included in the region where the detection accuracy of the flow rate is low. Therefore, in the conventional fluid measurement apparatus, the high detection accuracy of the flow rate cannot be maintained according to the external environments in which the flow rates differ from each other.

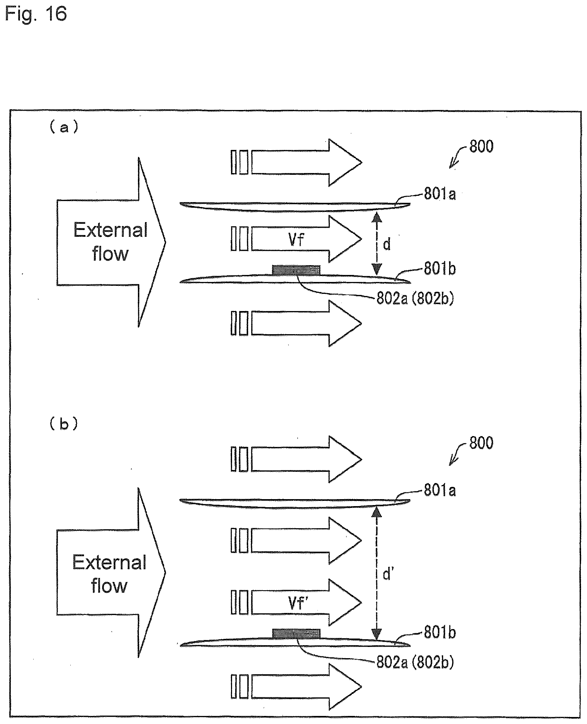

For example, in a fluid detection device 800 of in Patent Document 2 in Fig. 14, it is conceivable to adjust a gap between two fluid guide plates 801 a and 801 b in order to respond to the change in flow rate of the external environment. However, in the fluid detection device 800, as illustrated in Figs. 16(a) and 16(b), a velocity vf (Fig. 16(a)) of the fluid contacting with the fluid detection element 802a (802b) at a gap d between the two fluid guide plates 801 a and 801 b is rarely different from a velocity vf' (Fig. 16(b)) of the fluid contacting with the fluid detection element 802a (802b) when the gap d is changed to d'. Thus, the conventional fluid detection device 800 cannot respond to the change in flow rate of the external environment by a simple design change.

On the other hand, in the fluid measurement apparatus 100 of the invention, the flow rate in the centrifugal separation channel unit 1032b can be adjusted by the simple design change in which a channel area S1 of the centrifugal separation channel unit 1032a in Fig. 5, a channel area S2 of the centrifugal separation channel unit 1032b, and a channel area S3 of the bottom channel unit 1034 are adjusted, and therefore the flow rate in the detector channel unit 1033 can easily be adjusted. For example, the flow rate in the detector channel unit 1033 can be decreased by the design change such that a sum of S2 and S3 is increased with respect to S1 or such that a ratio of S2 to S3 is decreased.

That is, in the configuration of the fluid measurement apparatus 100, the flow rate of the fluid contacting with each of the detection elements 1043a and 1043b (detector 1043) can easily be adjusted so as to be included in the optimum flow rate sensitive region of the detection elements 1043a and 1043b (detector 1043) according to the flow rate of the external environment.

The fluid measurement apparatus 100 can also be said to include the internal channel structure in which, by changing dimensions of the internal cylindrical channel (centrifugal separation channel units 1032a and 1032b), a split flow ratio is controlled to facilitate the adjustment of the flow rate of the fluid reaching the detector 1043.

### [Modifications]

In the configuration of the first embodiment, the two detection elements 1043a and 1043b constituting the detector 1043 are adjacent to each other in the channel direction while arranged on the detection element board 101.

Alternatively, like a fluid measurement apparatus 100a schematically illustrated in Fig. 7, the detection elements 1043a and 1043b are arranged on the detection element board 101 a and 101 b with the channel interposed therebetween, and the detection elements 1043a and 1043b may be opposed to each other in the direction perpendicular to the channel direction.

In the configuration in Fig. 7, (almost the whole of) the fluid contacting with each of the detection elements 1043a and 1043b flows in the direction perpendicular to the direction in which the detection elements 1043a and 1043b are opposed to each other. Therefore, in the detection elements 1043a and 1043b, detection axis direction components of the fluid velocities are detected at the same position in the fluid flowing direction. At this point, at the same position in the fluid flowing direction, it is considered that the fluids detected by the detection elements 1043a and 1043b flow in the same direction. Accordingly, the detector 1043 can detect the correct direction of the fluid without generating the measurement error caused by a position shift between the two detection element units.

As described above, in the configuration of the fluid measurement apparatus 100, the centrifugal separation channel units 1032a and 1032b are horizontally arrayed in parallel with each other. Accordingly, the channel is inverted and folded back at the connection unit between the centrifugal separation channel units 1032a and 1032b. At the connection unit, a turbulent flow is easily generated by the rapid change of the flow direction.

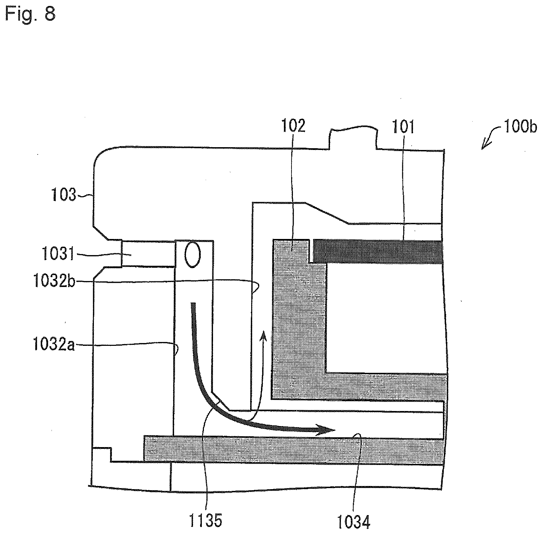

Therefore, like a fluid measurement apparatus 100b in Fig. 8 that is of an enlarged view illustrating a neighborhood of the connection unit, a chamfer 1135 may be provided at the connection unit between the centrifugal separation channel units 1032a and 1032b in order to buffer the rapid change of the channel direction. According to the configuration of the fluid measurement apparatus 100b, part of the fluid flows along the chamfer 1135 from the centrifugal separation channel unit 1032a to change the flow direction, and the flow direction comes close to the direction of the centrifugal separation channel unit 1032b. Accordingly, the generation of the retaining flow and turbulent flow, which are caused by the rapid change of the channel direction, can be constrained.

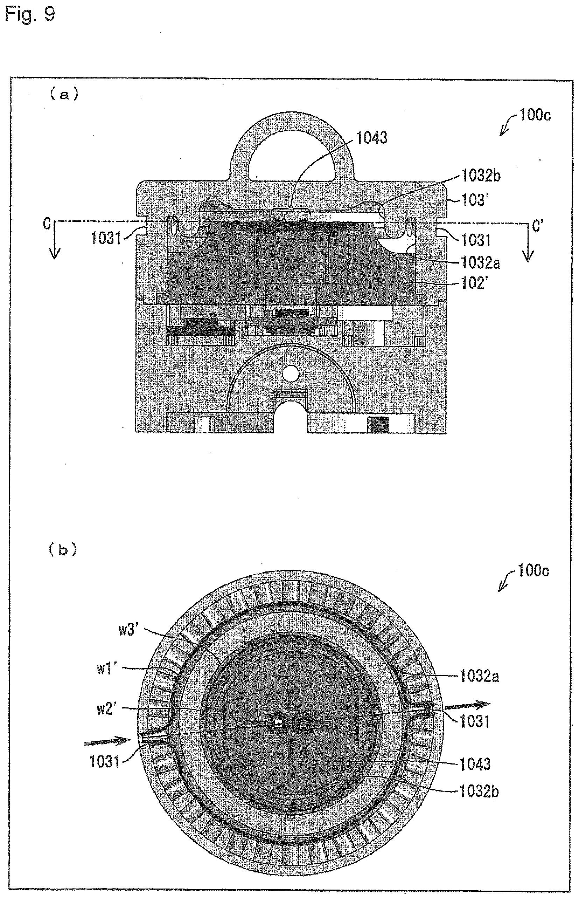

Alternatively, as illustrated in Fig. 9(a), like a fluid measurement apparatus 100c according to still another modification of the first embodiment, the connection unit between the centrifugal separation channel units 1032a and 1032b in the detection element board mounting unit 102' and the connection unit between the centrifugal separation channel unit 1032b and the detector channel unit 1033 in the upper structure 103' may be formed into curved shaped. According to the configuration of the fluid measurement apparatus 100c, the flow of the fluid is stabilized because the generation of the retaining flow and the turbulent flow are constrained in the two connection units.

The fluid measurement apparatus 100c does not include the bottom channel unit. Fig. 9(b) is a sectional view taken on a broken line C-C' in Fig. 9(a). As indicated by arrows w1', w2', and w3' in Fig. 9(b), in the fluid measurement apparatus 100c, part of the fluid flowing in from the inflow and outflow unit 1031 flows directly out from the inflow and outflow unit 1031 through the centrifugal separation channel unit 1032a (w1'), and different part of the fluid contacts with the detector 1043 through centrifugal separation channel units 1032a and 1032b and flows out from the inflow and outflow unit 1031 through the centrifugal separation channel units 1032b and 1032a (w2') again. The remaining fluid flows out from the inflow and outflow unit 1031 through the centrifugal separation channel units 1032a and 1032b (w3').

### (Signal processing and output)

Processing performed by the arithmetic unit 1042 will be described below with reference to Fig. 10.

Fig. 10 is a block diagram illustrating a configuration of the signal processing circuit 105.

Voltage signals detected by the two detection elements 1043a and 1043b constituting the detector 1043 are transmitted to the arithmetic unit 1042 after an analog front-end adjusts the voltage signals. The arithmetic unit 1042 calculates the velocity and the direction of the fluid in the channel from the voltage signals. The arithmetic unit 1042 performs processing of converting a calculation result into the velocity and the direction of the fluid in the external environment according to the channel design, and output the velocity and the direction of the fluid in the external environment to the outside.

The arithmetic unit 1042 may acquire temperature and humidity information on the external environment from the temperature and humidity sensor 1044. The arithmetic unit 1042 may output, as data, a comfort index (PMV (Predicted Mean Vote), SET* (Standard new Effective Temperature)), and a heat stroke risk calculated from the information on the velocity and the direction of the fluid and the temperature and humidity information.

The arithmetic unit 1042 may acquire absolute azimuth information from the azimuth sensor 1045, correct information on the fluid direction acquired from the detector 1043 into the direction based on an absolute azimuth, and output the corrected information on the fluid direction.

### [Supplement]

### (Detection principle of detector)

The detector 1043 includes the two detection elements 1043a and 1043b. The detection elements 1043a and 1043b are arranged on the detection element board 101 while the detection axis direction of the detection elements 1043a and 1043b are orthogonal to each other in a plane of the channel direction. Each of the detection elements 1043a and 1043b can detect the flow rate in one direction (detection axis direction).

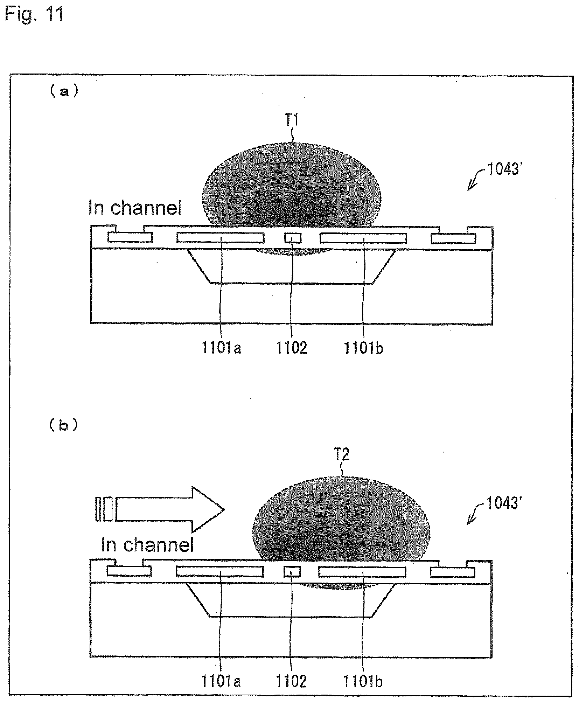

A principle detecting the fluid velocity with the detection elements 1043a and 1043b will be described with reference to Figs. 11 (a) and 11 (b). A detection element 1043' in Figs. 11 (a) and 11(b) may be regarded as any one of the detection elements 1043a and 1043b.

As illustrated in Figs. 11 (a) and 11 (b), the detection element 1043' includes two thermopiles 1101a and 1101b and a heater element 1102. The thermopile 1101a, the heater element 1102, and the thermopile 1101b are arrayed in line along the channel. The array direction is the detection axis direction of the detection element 1043'.

The heater element 1102 radiates heat to form a thermal distribution of the fluid in the channel.

Fig. 11 (a) illustrates a thermal distribution T1 in a state in which the fluid is held still in the channel. The thermal distribution T1 has a symmetry in the detection axis direction with respect to the heater element 1102. The thermopiles 1101 a and 1101 b detect the temperatures at the positions where the thermopiles 1101a and 1101b are arranged as voltage values. Accordingly, for example, in the case that a distance from the thermopile 1101a to the heater element 1102 is equal to a distance from the thermopile 1101 b to the heater element 1102, the temperatures detected by the thermopiles 1101a and 1101b are equal to each other because the thermal distribution T1 has the symmetry in the detection axis direction.

Fig. 11(b) illustrates a thermal distribution T2 in a state in which the flow exist in the channel. At this point, the thermal distribution T2 loses the symmetry in the detection axis direction because the flow exists in the arrow direction. Therefore, the temperatures detected by the thermopiles 1101 a and 1101b differ from those in the still state of the fluid. Similarly, the thermal distribution varies in the case that the flow rate varies while the fluid flows. Accordingly, when a relationship between the flow rate and the thermal distribution is previously checked, the flow rate can be detected by the temperatures detected by the thermopiles 1101a and 1101b.

In the detection element 1043', a difference in flow rate is detected as the temperatures detected by the thermopile 1101 a and 1101 b.

The detection element 1043' acquires the temperatures detected by the thermopiles 1101a and 1101b as a voltage difference ΔV between the output voltages of the thermopiles. At this point, a relationship between the flow rate Vf to be measured and the voltage difference ΔV is expressed by ΔV = A-(Th-Ta)-(Vf)^{1/b}. Where Th is a temperature at the heater element 1102, Ta is a temperature in the external environment, and A and b are constants.

Thus, the flow rate Vf in the detection axis direction is detected by the detection element 1043'.

The detector 1043 acquires the flow rates in the detection axis directions, namely, the flow rate components orthogonal to each other from the detection elements 1043a and 1043b in which the detection axis directions are orthogonal to each other, thereby detecting the velocity and the direction of the fluid.

### [Second embodiment]

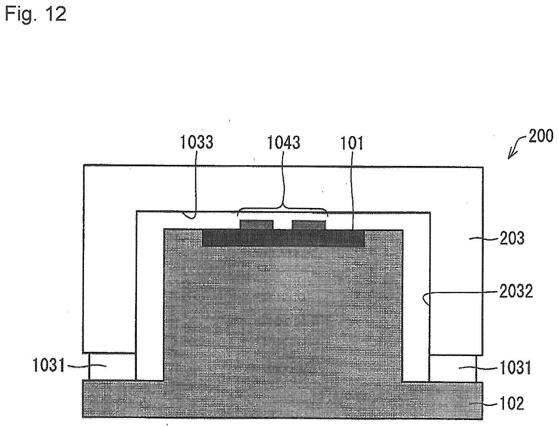

A fluid measurement apparatus according to a second embodiment of the invention will be described below with reference to Fig. 12. The component similar to that of the first embodiment is designated by the same symbol, and the description is neglected.

Fig. 12 is a schematic diagram illustrating a fluid measurement apparatus 200 of the second embodiment.

The fluid measurement apparatus 200 differs from the fluid measurement apparatus 100 of the first embodiment in that the fluid measurement apparatus 200 includes one centrifugal separation channel unit (centrifugal separation channel) 2032. On the other hand, the fluid measurement apparatus 100 includes the two centrifugal separation channel units 1032a and 1032b. Therefore, a shape of an upper structure 203 of the fluid measurement apparatus 200 differs from that of the upper structure 103. Because of the difference of the configuration, the fluid channel of the fluid measurement apparatus 200 differs from that of the fluid measurement apparatus 100.

The channel of the fluid measurement apparatus 200 will be described below.

The fluid flowing in the fluid measurement apparatus 200 flows therein while forming two flows. In a first flow, the fluid proceeds sequentially through the inflow and outflow unit 1031, a centrifugal separation channel unit 2032, the detector channel unit 1033, a centrifugal separation channel unit 2032, and the inflow and outflow unit 1031. In a second flow, the fluid proceeds sequentially through the inflow and outflow unit 1031, the centrifugal separation channel unit 2032, and the inflow and outflow unit 1031.

The centrifugal separation channel unit 2032 is a ring channel that is formed in a gap between the inside surface and the outside surface of the two coaxial cylinders having the different diameters. In the outside surface and the inside surface, the perpendicular axis passing through the detector 1043 is used as the center axis. In the outside surface, the centrifugal separation channel unit 2032 communicates with the inflow and outflow unit 1031 in the whole azimuthal direction.

In the lower region of the outside surface of the centrifugal separation channel unit 2032, the centrifugal separation channel unit 2032 communicates with the inflow and outflow unit 1031 in the whole azimuthal direction. The detector channel unit 1033 communicates with the upper region of the inside surface of the centrifugal separation channel unit 2032 in the whole azimuthal direction.

The fluid flowing in from the inflow and outflow unit 1031 flows partially out from the inflow and outflow unit 1031 through the centrifugal separation channel unit 2032, the detector channel unit 1033, and the centrifugal separation channel unit 2032. The remaining fluid flows directly out through the centrifugal separation channel unit 2032.

Similarly to the first embodiment, the fluid passing through the centrifugal separation channel unit 2032 flows along the ring-like circumferential direction, and is subjected to the centrifugal force toward the outside of the circumference, namely, the outside surface direction of the centrifugal separation channel unit 2032. Because the dust G subjected to the centrifugal force is discharged from the inflow and outflow unit 1031 to the outside while flowing near the outside surface, the dust included in the fluid decreases. Because the dust that is not discharged to the outside flows along the outside surface of the centrifugal separation channel unit 2032, almost the dust does not flow in the detector channel unit 1033.

Accordingly, while the fluid measurement apparatus 200 has the configuration simpler than the fluid measurement apparatus 100, the dust hardly adheres to the detector 1043.

The velocity of the fluid flowing in the detector channel unit 1033 can be controlled by adjusting a ratio between the channel area of the detector channel unit 1033 and the channel area of the centrifugal separation channel unit 2032.

In the fluid measurement apparatus 200, the component of the control board 1041 on which the arithmetic unit 1042 is arranged may be identical to that of the detection element board 101. The temperature and humidity sensor and the azimuth sensor may be arranged on the detection element board 101.

### [Third embodiment]

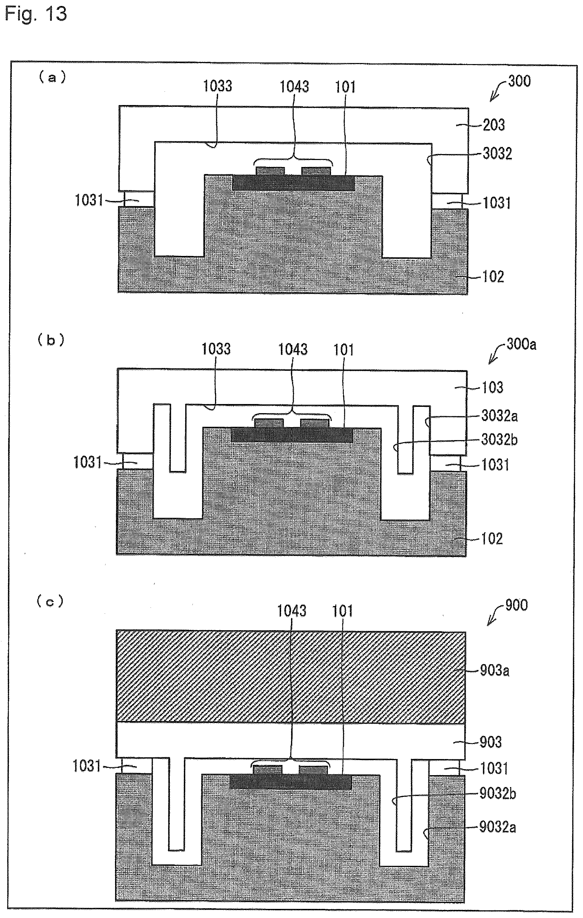

A fluid measurement apparatus according to a third embodiment of the invention will be described below with reference to Figs. 13(a) to 13(c). The component similar to that of the first and second embodiments is designated by the same symbol, and the description is neglected.

Figs. 13(a) and 13(b) are schematic diagrams of fluid measurement apparatuses 300 and 300a of the third embodiment. Figs. 13(a) illustrates a configuration example in which one centrifugal separation channel unit (centrifugal separation channel) 3032 is included, and Fig. 13(b) illustrates a configuration in which two centrifugal separation channel units (centrifugal separation channels) 3032a and 3032b are included.

In the fluid measurement apparatus 300 (300a), the connection unit between the inflow and outflow unit 1031 and the centrifugal separation channel unit 3032a are located in a central region of the outside surface of the centrifugal separation channel unit 3032 (3032a) with respect to the center axis direction.

Fig. 13(c) is a schematic diagram illustrating a fluid measurement apparatus 900 of a reference.

The fluid measurement apparatus 900 differs from the fluid measurement apparatus 300 (300a) in that the position where the inflow and outflow unit 1031 and the centrifugal separation channel unit 9032a communicate with each other is located in the upper region of the outside surface of the centrifugal separation channel unit 9032a (an end region different from the lower region connected to the centrifugal separation channel unit 9032b).

The fluid flow in the fluid measurement apparatus 300 (300a) will be described below in comparison with that of the fluid measurement apparatus 900.

In the fluid measurement apparatuses 300, 300a, and 900, a large part of the fluid flowing in from the inflow and outflow unit 1031 flows in the horizontal direction. In other words, a main flow direction of the fluid flowing in from the inflow and outflow unit 1031 is the horizontal direction. This is because the inflow and outflow unit 1031 is provided in the perpendicular side surface of each of the fluid measurement apparatuses 300, 300a, and 900.

In the fluid measurement apparatus 300 (300a), in the fluid flowing in from the inflow and outflow unit 1031, while the amount of fluid that flows perpendicularly in the centrifugal separation channel unit 3032 (3032a) to change the flow rate is smaller than that of the fluid measurement apparatus 900, the amount of fluid flowing in the horizontal direction is larger than that of the fluid measurement apparatus 900. The reason is as follows.

In the fluid measurement apparatus 900, the fluid flowing in horizontally from the inflow and outflow unit 1031 flows in the region surrounded by the upper side surface and the inside surface of the centrifugal separation channel unit 9032a. The main flow direction of the fluid becomes an obliquely downward direction along the ring-like shape of the centrifugal separation channel unit 9032a by a resultant force of reaction in the upper side surface and the inside surface.

On the other hand, in the fluid measurement apparatus 300 (300a), the fluid flowing in from the inflow and outflow unit 1031 is subjected only to the reaction from the inside surface of the centrifugal separation channel unit 9032a, but the reaction is not generated in the vertical direction. That is, because the perpendicular component of the flow rate does not change, the main flow direction of the fluid exists on a horizontal plane that is substantially flush with the inflow and outflow unit 1031 along the ring-like shape of the centrifugal separation channel unit 9032a.

The dust included in the fluid (main flow) flowing along the ring-like shape flows near the outside surface of the centrifugal separation channel unit 3032 (3032a) by the centrifugal force. Because the inflow and outflow unit 1031 is provided in the outside surface on the horizontal plane of the flowing direction, the dust is discharged to the outside from the inflow and outflow unit 1031. Accordingly, the dust included in the fluid decreases.

That is, compared with the fluid measurement apparatus 900, the fluid measurement apparatus 300 (300a) has the configuration in which the dust is easily discharged from the inflow and outflow unit 1031 because the inflow and outflow unit 1031 exists on the horizontal surface flush with the main flow direction in which the flow rate of the fluid is the highest. Accordingly, the effect that the dust does not adhere to the detector 1043 is enhanced.

Additionally, in the fluid measurement apparatus 300 (300a), the inflow and outflow unit 1031 is provided near the center in the height direction of the fluid measurement apparatus 300 (300a). The configuration of the fluid measurement apparatus 300 (300a) has the high external symmetry in the vertical direction. Therefore, there is a small difference of a fluid inflow amount between the flow rate components in the vertical direction of the fluid.

Accordingly, the error caused by the change of the amount of fluid flowing in according to an incident angle of the fluid in the vertical direction with respect to the inflow and outflow unit 1031 can be constrained from being generated in the measured value of the flow rate.

In the fluid measurement apparatus 300 (300a), because the inflow and outflow unit 1031 is provided at the central position in the outside surface of the centrifugal separation channel unit 3032 (3032a), the outside surface extends vertically with respect to the level at which the inflow and outflow unit 1031 is provided. Accordingly, the inflow and outflow unit 1031 is easily provided near the center in the height direction of the fluid measurement apparatus 300 (300a).

On the other hand, in the fluid measurement apparatus 900, an additional structure 903a is provided on the top of the upper structure 103 in order to enhance the external symmetry in the vertical direction.

The invention is not limited to the above embodiments, but various changes can be made without departing from the scope of the invention described in claims. It is noted that another embodiment obtained by a proper combination of technical means disclosed in the embodiments is also included in the technical scope of the invention.

### [Supplementary information]

The invention can also be expressed as follows. That is, a fluid measurement apparatus of the invention includes: a detector configured to detect at least one of a fluid velocity and a fluid direction by contacting with the fluid; an inflow and outflow unit provided on a circumference of a circle having a center on a predetermined center axis, the fluid flowing in the inflow and outflow unit from an outside of the fluid measurement apparatus and flowing out from the inflow and outflow unit to the outside of the fluid measurement apparatus; a centrifugal separation channel including a ring channel centered on the center axis, and configured to communicate with the inflow and outflow unit by a connection unit provided on a circumference parallel to the ring channel; and a detector channel configured to communicate with the centrifugal separation channel by a connection unit provided on a circumference parallel to the centrifugal separation channel, the detector being provided at a position passing through the center axis.

According to the configuration, the fluid measurement apparatus includes the inflow and outflow unit and the centrifugal separation channel. The fluid flows in the inflow and outflow unit provided on the circumference of the circle and flows out from the inflow and outflow unit. The centrifugal separation channel communicates with the inflow and outflow unit by the connection unit provided on the circumference parallel to the channel. In the configuration, in the fluid flowing in the centrifugal separation channel from the inflow and outflow unit, part of the fluid returns to the centrifugal separation channel through the detector channel, and flows out from the inflow and outflow unit.

Therefore, the dust included in the fluid flowing in the centrifugal separation channel constructed with the ring channel is subjected to the centrifugal force in the centrifugal separation channel, and flows in the region near the ring outside surface. Accordingly, because the amount of dust included in the fluid flowing through the detector channel can be constrained, the dust hardly adheres to the detector.

As described above, the inflow and outflow unit, the connection unit between the inflow and outflow unit and the centrifugal separation channel, and the connection unit between the centrifugal separation channel and the detector channel are provided on the circumference. Accordingly, a configuration can be made in which the inflow and the outflow of the fluid are not affected by the fluid flowing direction. That is, one of the velocity and the direction of the fluid can be detected irrespective of the influence of the fluid flowing direction.

According to the configuration, part of the fluid flowing in centrifugal separation channel flows in the detector channel. Therefore, the amount of fluid flowing in the detector channel depends on the size of the conduction region between the centrifugal separation channel and the detector channel. On the other hand, in the element of the detector, the velocity range where the velocity of the fluid can accurately be measured is fixed according to the specifications of the element. That is, according to the configuration, using the same element of the detector, a fluid measurement apparatus can be provided in which various velocity states of the external fluid can be dealt with by properly setting the size of the conduction region between the centrifugal separation channel and the detector channel.

The detector may include plural detection element units as described later. In this case, the region of the detector includes the region where the plural detection element units are arranged. The detector is provided at the position passing through the center axis.

In the fluid measurement apparatus of the invention, the detector channel may communicate with the centrifugal separation channel in an inside surface that is of a surface located on a center axis side in surfaces constituting the centrifugal separation channel.

According to the configuration, the detector channel communicates with the centrifugal separation channel in the inside surface of the centrifugal separation channel. At this point, the direction in which the dust in the fluid is separated from the fluid is the direction of the outside surface of the centrifugal separation channel. Therefore, a smaller amount of dust is included in the fluid flowing in the detector channel. Accordingly, the dust can be prevented from adhering to the detector.

In the fluid measurement apparatus of the invention, the inflow and outflow unit may communicate with the centrifugal separation channel in an outside surface that is of a surface located on an opposite side with respect to the center axis in the surfaces constituting the centrifugal separation channel.

According to the configuration, the inflow and outflow unit communicates with the centrifugal separation channel in the outside surface of the centrifugal separation channel that is of the direction in which the dust is subjected to the centrifugal force. Therefore, the dust moving to the outside surface is discharged to the outside from the inflow and outflow unit. Accordingly, the clean channel can be maintained.

In the fluid measurement apparatus of the invention, the detector may include two detection element units configured to detect the fluid velocity in an uniaxial direction, the two detection element units may be arranged such that axes on each of which the fluid velocity in the uniaxial direction is detected are orthogonal to each other, and the two detection element units may be opposed to each other in a direction perpendicular to a direction of the detector channel.

According to the configuration, the two detection element units are arranged such that the axes on each of which the fluid velocity is detected are orthogonal to each other. Therefore, the two detection elements can detect the orthogonal components of the velocity and the direction of the fluid.

According to the configuration, the two detection element units constituting the detector detects the velocity in the uniaxial direction of the fluid, and the detection element units are opposed to each other in the direction perpendicular to the channel direction. Therefore, the two detection element units can detect the fluid velocity at the same position in the fluid flowing direction. Accordingly, the detector can correctly detect the velocity and the direction of the fluid without generating the measurement error caused by the position shift between the two detection element units.

In the fluid measurement apparatus of the invention, the detector may include two detection element units configured to detect the fluid velocity in an uniaxial direction, the two detection element units may be arranged such that axes on each of which the fluid velocity in the uniaxial direction is detected are orthogonal to each other, and the two detection element units may be located on an identical side with respect to the detector channel while being adjacent to each other in a direction of the detector channel.

According to the configuration, the two detection element units are arranged such that the axes on each of which the fluid velocity is detected are orthogonal to each other. Therefore, the two detection elements can detect the orthogonal components of the fluid velocity.

Additionally, in the configuration, the two detection element units are provided on the same side with respect to the detector channel. Therefore, electric wirings connected to the two detection element units can be provided on the same side with respect to the detector channel. Accordingly, routing of the electric wiring can be facilitated.

In the fluid measurement apparatus of the invention, the centrifugal separation channel may include plural ring channels having radii different from each other.

According to the configuration, the plural ring channels included in the centrifugal separation channel have the radii different from each other. At this point, the ring channel having the large radius has a long channel length in the ring portion thereof, and the ring channel having the small radius has a large curvature. Accordingly, the ring channel having the large radius can separate a large amount of dust. In the ring channel having the small radius, the centrifugal force acts strongly on the fluid and dust, which pass through the ring portion thereof. Therefore, not only the heavy dust but also the small, light dust can be separated.

In the fluid measurement apparatus of the invention, a throttle may be provided in the detector channel in order to reduce a sectional area of the detector channel at the position where the fluid contacts with the detector compared with sectional areas of the detector channel at other positions.

According to the configuration, the sectional area (channel area) of the detector channel is reduced at the position contacting with the detector by the throttle of the detector channel. Therefore, the flow of the fluid is stabilized at the position contacting with the detector. Accordingly, the detector can correctly detect the velocity and the direction of the fluid.

In the fluid measurement apparatus of the invention, the inflow and outflow unit may communicate with the centrifugal separation channel in a central region in the center axis direction in the outside surface that is of the opposite surface with respect to the center axis in the surfaces constituting the centrifugal separation channel.

According to the configuration, the main stream direction of the fluid flowing from the inflow and outflow unit exist on a horizontal plane perpendicular to the center axis direction in the centrifugal separation channel. That is, the dust is easily discharged from the inflow and outflow unit because the inflow and outflow unit exists on the horizontal surface flush with the main flow direction in which the flow rate of the fluid is the highest.

In the fluid measurement apparatus of the invention, at least one of corner portions in an outline of the connection unit in which the different channels communicate with each other may be chamfered or rounded by a curved shape in a planar section including the center axis.

According to the configuration, the flow of the fluid passing through the connection unit is stabilized. Accordingly, the changes in velocity and direction of the fluid can be constrained in the connection unit.

Sometimes a user of the fluid measurement apparatus wants to know the velocity and the direction of the fluid in the external environment of the fluid measurement apparatus.

Therefore, the fluid measurement apparatus of the invention may further include an arithmetic unit configured to acquire data of the fluid velocity and the fluid direction from the detector, perform an operation to the data, and output the fluid velocity and the fluid direction in an external environment.

Even if the fluid measurement apparatus is installed in any direction with respect to the external environment to be measured, preferably the fluid direction in the external environment can be detected based on the absolute azimuth irrespective of the direction of the fluid measurement apparatus.

Therefore, the fluid measurement apparatus of the invention may further include an azimuth detector configured to detect an absolute azimuth. In the fluid measurement apparatus, the arithmetic unit may output an absolute-azimuth-based direction as the fluid direction in the external environment based on the absolute azimuth detected by the azimuth detector and the fluid direction detected by the detector.

The fluid measurement apparatus of the invention may further include at least one of a temperature detector configured to detect a temperature of the fluid and a humidity detector configured to detect humidity of the fluid. In the fluid measurement apparatus, the arithmetic unit may perform an operation based on at least one of pieces of data of the detected temperature and humidity and pieces of data of the fluid velocity and the fluid direction, and output index data of an environmental state.

According to the configuration, for example, index data of the environmental state such as a comfort level of the external environment can be provided to the user based on at least one of the temperature and the humidity of the fluid and the velocity and the direction of the fluid.

The specific examples are described in the modes for carrying out the invention in order to illustrate technical contents of the invention, but the invention is not limited to the specific examples. Various changes can be made without departing from the scope of the invention as defined in the appended claims.

### INDUSTRIAL APPLICABILITY

The invention can be applied to the fluid measurement apparatus that detects the velocity and the direction of the fluid. Particularly, the invention can be used for monitoring of a down flow in a clean room, monitoring of airflow in a data center, monitoring of air conditioning and amenity in a factory of a workplace, and monitoring of air conditioning, a ventilation state, and amenity in a home.

### DESCRIPTION OF SYMBOLS

100, 100a, 100b, 100c, 200, 300, 300a fluid measurement apparatus
1031 inflow and outflow unit
1032a, 1032b, 2032, 3032, 3032a, 3032b centrifugal separation channel unit (centrifugal separation channel)
1033detector channel unit (detector channel)
1042 arithmetic unit
1043 detector
1043a, 1043b detection element (detection element unit)
1044temperature and humidity sensor (temperature detector/humidity detector)
1045 azimuth sensor (azimuth detector)

## Claims

1. A fluid measurement apparatus (100, 100a, 100b, 100c, 200, 300, 300a) comprising: a detector (1043) configured to detect at least one of a fluid velocity and a fluid direction by contacting with the fluid;
an inflow and outflow unit (1031) provided on a circumference of a circle having a center on a predetermined center axis, and configured such that the fluid can flow in a whole azimuthal direction in the inflow and outflow unit (1031) from an outside of the fluid measurement apparatus (100, 100a, 100b, 100c, 200, 300, 300a) and out from the inflow and outflow unit (1031) to the outside of the fluid measurement apparatus (100, 100a, 100b, 100c, 200, 300, 300a);
a centrifugal separation channel (1032a, 1032b, 2032, 3032, 3032a, 3032b) comprising a ring channel centered on the center axis, and configured to communicate with the inflow and outflow unit (1031) in the whole azimuthal direction by a connection unit provided on a circumference parallel to the ring channel; and
a detector channel (1033) configured to communicate with the centrifugal separation channel (1032a, 1032b, 2032, 3032, 3032a, 3032b) in the whole azimuthal direction by a connection unit provided on a circumference parallel to the centrifugal separation channel (1032a, 1032b, 2032, 3032, 3032a, 3032b), the detector (1043) being provided at a position passing through the center axis, wherein the fluid measurement apparatus (100, 100a, 100b, 100c, 200, 300, 300a) is configured such that part of the fluid flows sequentially through the inflow and outflow unit (1031), the centrifugal separation channel (1032a, 1032b, 2032, 3032, 3032a, 3032b), the detector channel (1033), the centrifugal separation channel (1032a, 1032b, 2032, 3032, 3032a, 3032b), and the inflow and outflow unit (1031).

2. The fluid measurement apparatus (100, 100a, 100b, 100c, 200, 300, 300a) according to claim 1, wherein the detector channel (1033) communicates with the centrifugal separation channel (1032a, 1032b, 2032, 3032, 3032a, 3032b) in an inside surface that is a surface located on a center axis side of surfaces constituting the centrifugal separation channel (1032a, 1032b, 2032, 3032, 3032a, 3032b).

3. The fluid measurement apparatus according to claim 1 or 2, wherein the inflow and outflow unit (1031) is provided in an outside surface that is an opposite surface with respect to the center axis of the surfaces constituting the centrifugal separation channel (1032a, 1032b, 2032, 3032, 3032a, 3032b).

4. The fluid measurement apparatus (100, 100a, 100b, 100c, 200, 300, 300a) according to any one of claims 1 to 3, wherein the detector (1043) comprises two detection element units (1043a, 1043b) configured to detect the fluid velocity in an uniaxial direction, the two detection element units (1043a, 1043b) are arranged such that axes on each of which the fluid velocity in the uniaxial direction is detected are orthogonal to each other, and the two detection element units (1043a, 1043b) are opposed to each other in a direction perpendicular to a direction of the detector channel (1033).

5. The fluid measurement apparatus (100, 100a, 100b, 100c, 200, 300, 300a) according to any one of claims 1 to 3, wherein the detector (1043) comprises two detection element units (1043a, 1043b) configured to detect the fluid velocity in an uniaxial direction, the two detection element units (1043a, 1043b) are arranged such that axes on each of which the fluid velocity in the uniaxial direction is detected are orthogonal to each other, and the two detection element units (1043a, 1043b) are located on an identical side with respect to the detector channel (1033) while being adjacent to each other in a direction of the detector channel (1033).

6. The fluid measurement apparatus (100, 100a, 100b, 100c, 300a) according to any one of claims 1 to 5, wherein the centrifugal separation channel (1032a, 1032b, 3032a, 3032b) comprises a plurality of ring channels (1032a, 1032b, 3032a, 3032b) having radii different from each other.

7. The fluid measurement apparatus according (100, 100a, 100b, 100c, 200, 300, 300a) to any one of claims 1 to 6, wherein a throttle is provided in the detector channel (1033) in order to reduce a sectional area of the detector channel (1033) at the position where the fluid contacts with the detector (1043) compared with sectional areas of the detector channel (1033) at other positions.

8. The fluid measurement apparatus (100, 100a, 100b, 100c, 200, 300, 300a) according to any one of claims 1 to 7, wherein the inflow and outflow unit (1031) communicates with the centrifugal separation channel (1032a, 1032b, 2032, 3032, 3032a, 3032b) in a central region in the center axis direction in the outside surface that is the opposite surface with respect to the center axis of the surfaces constituting the centrifugal separation channel (1032a, 1032b, 2032, 3032, 3032a, 3032b).

9. The fluid measurement apparatus (100b) according to any one of claims 1 to 8, wherein at least one of corner portions (1135) in an outline of the connection unit in which the different channels (1032a, 1032b) communicate with each other is chamfered or rounded by a curved shape in a planar section comprising the center axis.

10. The fluid measurement apparatus (100, 100a, 100b, 100c, 200, 300, 300a) according to any one of claims 1 to 9, further comprising an arithmetic unit (1042) configured to acquire data of the fluid velocity and the fluid direction from the detector (1043), perform an operation to the data, and output the fluid velocity and the fluid direction in an external environment.

11. The fluid measurement apparatus (100, 100a, 100b, 100c, 200, 300, 300a) according to claim 10, further comprising an azimuth detector (1045) configured to detect an absolute azimuth,
wherein the arithmetic unit (1042) outputs an absolute-azimuth-based direction as the fluid direction in an external environment based on the absolute azimuth detected by the azimuth detector (1045) and the fluid direction detected by the detector (1043).

12. The fluid measurement apparatus (100, 100a, 100b, 100c, 200, 300, 300a) according to claim 10 or 11, further comprising at least one of a temperature detector (1044) configured to detect a temperature of the fluid and a humidity detector (1044) configured to detect humidity of the fluid,
wherein the arithmetic unit (1042) performs an operation based on at least one of pieces of data of the detected temperature and humidity and pieces of data of the fluid velocity and the fluid direction, and outputs index data of an environmental state.

## Patentansprüche

1. Fluidmessvorrichtung (100, 100a, 100b, 100c, 200, 300, 300a), umfassend: einen Detektor (1043) der dazu eingerichtet ist, zumindest eines ausgewählt aus einer Fluidgeschwindigkeit und einer Fluidrichtung durch Kontakt mit dem Fluid zu ermitteln;
eine Zu- und Abflusseinheit (1031), die an einem Umfang eines Kreises vorgesehen ist, der einen Mittelpunkt auf einer vorgegebenen Mittelachse aufweist, und derart eingerichtet ist, dass das Fluid in einer gesamten azimutalen Richtung in die Zu- und Abflusseinheit (1031) von außerhalb der Fluidmessvorrichtung (100, 100a, 100b, 100c, 200, 300, 300a) und aus der Zu- und Abflusseinheit (1031) nach außerhalb der Fluidmessvorrichtung (100, 100a, 100b, 100c, 200, 300, 300a) fließen kann;
einen Zentrifugalabscheidungskanal (1032a, 1032b, 2032, 3032, 3032a, 3032b), der einen Ringkanal aufweist, welcher auf die Mittelachse zentriert ist, und dazu eingerichtet ist, mit der Zu- und Abflusseinheit (1031) in der gesamten azimutalen Richtung mittels einer Verbindungseinheit zu kommunizieren, die an einem Umfang parallel zu dem Ringkanal vorgesehen ist; und
einen Detektorkanal (1033) der dazu eingerichtet ist, mit dem Zentrifugalabscheidungskanal (1032a, 1032b, 2032, 3032, 3032a, 3032b) in der gesamten azimutalen Richtung mittels einer Verbindungseinheit zu kommunizieren, die an einem Umfang parallel zu dem Zentrifugalabscheidungskanal (1032a, 1032b, 2032, 3032, 3032a, 3032b) vorgesehen ist, wobei der Detektor (1043) an einer Position vorgesehen ist, welche die Mittelachse durchläuft, wobei die Fluidmessvorrichtung (100, 100a, 100b, 100c, 200, 300, 300a) derart eingerichtet ist, dass ein Teil des Fluids sequenziell durch die Zu- und Abflusseinheit (1031), den Zentrifugalabscheidungskanal (1032a, 1032b, 2032, 3032, 3032a, 3032b), den Detektorkanal (1033), den Zentrifugalabscheidungskanal (1032a, 1032b, 2032, 3032, 3032a, 3032b), und die Zu- und Abflusseinheit (1031) fließt.

2. Fluidmessvorrichtung (100, 100a, 100b, 100c, 200, 300, 300a) gemäß Anspruch 1, wobei der Detektorkanal (1033) mit dem Zentrifugalabscheidungskanal (1032a, 1032b, 2032, 3032, 3032a, 3032b) in einer Innenoberfläche kommuniziert, welche eine mittelachsenseitig gelegene Oberfläche von Oberflächen ist, die den Zentrifugalabscheidungskanal (1032a, 1032b, 2032, 3032, 3032a, 3032b) bilden.

3. Fiuidmessvorrichtung gemäß Anspruch 1 oder 2, wobei die Zu- und Abflusseinheit (1031) in einer Außenoberfläche vorgesehen ist, die mit Bezug auf die Mittelachse eine gegenüberliegende Oberfläche der Oberflächen ist, die den Zentrifugalabscheidungskanal (1032a, 1032b, 2032, 3032, 3032a, 3032b) bilden.

4. Fluidmessvorrichtung (100, 100a, 100b, 100c, 200, 300, 300a) gemäß einem der Ansprüche 1 bis 3, wobei der Detektor (1043) zwei Detektorelementeinheiten (1043a, 1043b) aufweist, die dazu eingerichtet sind, die Fluidgeschwindigkeit in einer uniaxialen Richtung zu ermitteln, wobei die zwei Detektorelementeinheiten (1043a, 1043b) derart angeordnet sind, dass Achsen, entlang denen jeweils die Fluidgeschwindigkeit in der uniaxialen Richtung ermittelt wird, orthogonal zueinander sind, und die zwei Detektorelementeinheiten (1043a, 1043b) einander entlang einer Richtung gegenüber liegen, die senkrecht zu einer Richtung des Detektorkanals (1033) ist.

5. Fluidmessvorrichtung (100, 100a, 100b, 100c, 200, 300, 300a) gemäß einem der Ansprüche 1 bis 3, wobei der Detektor (1043) zwei Detektorelementeinheiten (1043a, 1043b) aufweist, die dazu eingerichtet sind, die Fluidgeschwindigkeit in einer uniaxialen Richtung zu ermitteln, wobei die zwei Detektorelementeinheiten (1043a, 1043b) derart angeordnet sind, dass Achsen, entlang denen jeweils die Fluidgeschwindigkeit in der uniaxialen Richtung ermittelt wird, orthogonal zueinander sind, und sich die zwei Detektorelementeinheiten (1043a, 1043b) mit Bezug auf den Detektorkanal (1033) auf einer selben Seite befinden während sie entlang einer Richtung des Detektorkanals (1033) nebeneinander angeordnet sind.

6. Fluidmessvorrichtung (100, 100a, 100b, 100c, 300a) gemäß einem der Ansprüche 1 bis 5, wobei der Zentrifugalabscheidungskanal (1032a, 1032b, 3032a, 3032b) eine Vielzahl von Ringkanälen (1032a, 1032b, 3032a, 3032b) umfasst, welche Radien aufweisen, die unterschiedlich voneinander sind.

7. Fluidmessvorrichtung (100, 100a, 100b, 100c, 200, 300, 300a) gemäß einem der Ansprüche 1 bis 6, wobei in dem Detektorkanal (1033) eine Drosselvorrichtung vorgesehen ist, um eine Querschnittsfläche des Detektorkanals (1033) an der Position, an der das Fluid mit dem Detektor (1043) in Kontakt kommt, im Vergleich mit Querschnittsflächen des Detektorkanals (1033) an anderen Positionen zu verringern.

8. Fluidmessvorrichtung (100, 100a, 100b, 100c, 200, 300, 300a) gemäß einem der Ansprüche 1 bis 7, wobei die Zu- und Abflusseinheit (1031) mit dem Zentrifugalabscheidungskanal (1032a, 1032b, 2032, 3032, 3032a, 3032b) in einem Mittelbereich in der Mittelachsenrichtung in der Außenoberfläche kommuniziert, welche mit Bezug auf die Mittelachse die gegenüberliegende Oberfläche der Oberflächen ist, die den Zentrifugalabscheidungskanal (1032a, 1032b, 2032, 3032, 3032a, 3032b) bilden.

9. Fluidmessvorrichtung (100b) gemäß einem der Ansprüche 1 bis 8, wobei in einem ebenen Schnitt, welcher die Mittelachse aufweist, zumindest einer von Eckabschnitten (1135) eines Umrisses der Verbindungseinheit, in der die unterschiedlichen Kanäle (1032a, 1032b) miteinander kommunizieren, abgeschrägt oder durch eine gekrümmte Form abgerundet ist.

10. Fluidmessvorrichtung (100, 100a, 100b, 100c, 200, 300, 300a) gemäß einem der Ansprüche 1 bis 9, ferner umfassend eine Recheneinheit (1042), die dazu eingerichtet ist, Daten über die Fluidgeschwindigkeit und die Fluidrichtung von dem Detektor (1043) abzurufen, die Daten zu verarbeiten, und die Fluidgeschwindigkeit und die Fluidrichtung in eine externe Umgebung auszugeben.

11. Fiuidmessvorrichtung (100, 100a, 100b, 100c, 200, 300, 300a) gemäß Anspruch 10, ferner umfassend einen Azimutdetektor (1045), der dazu eingerichtet ist, einen absoluten Azimut zu ermitteln,
wobei die Recheneinheit (1042) eine absoluter-Azimut-basierende Richtung als die Fluidrichtung in eine externe Umgebung ausgibt, basierend auf dem von dem Azimutdetektor (1045) ermittelten absoluten Azimut und der von dem Detektor (1043) ermittelten Fluidrichtung.

12. Fluidmessvorrichtung (100, 100a, 100b, 100c, 200, 300, 300a) gemäß Anspruch 10 oder 11, ferner umfassend zumindest einen Detektor ausgewählt aus einem Temperaturdetektor (1044), der dazu eingerichtet ist, eine Temperatur des Fluids zu ermitteln, und einem Feuchtigkeitsdetektor (1044), der dazu eingerichtet ist, eine Feuchtigkeit des Fluids zu ermitteln,
wobei die Recheneinheit (1042) eine Verarbeitung auf der Grundlage von zumindest einem ausgewählt aus der Gruppe bestehend aus Teilen der Daten der ermittelten Temperatur und Feuchtigkeit, und Teilen der Daten über die Fluidgeschwindigkeit und die Fluidrichtung durchführt, und Indexdaten über einen Umgebungszustand ausgibt.

## Revendications

1. Appareil de mesure de fluide (100, 100a, 100b, 100c, 200, 300, 300a) comprenant :
un détecteur (1043) configuré de manière à détecter au moins une quantité prise parmi une vitesse de fluide et une direction de fluide par mise en contact avec le fluide ;
une unité d'admission et de décharge (1031) prévue sur une circonférence d'un cercle comportant un centre sur un axe central prédéterminé, et configurée de telle sorte que le fluide puisse s'écouler dans une direction azimutale complète dans l'unité d'admission et de décharge (1031) depuis un extérieur de l'appareil de mesure de fluide (100, 100a, 100b, 100c, 200, 300, 300a) et en sortie depuis l'unité d'admission et de décharge (1031) jusqu'à l'extérieur de l'appareil de mesure de fluide (100, 100a, 100b, 100c, 200, 300, 300a) ;
un canal de séparation centrifuge (1032a, 1032b, 2032, 3032, 3032a, 3032b) comprenant un canal annulaire centré sur l'axe central, et configuré de manière à communiquer avec l'unité d'admission et de décharge (1031) sur toute la direction azimutale au moyen d'une unité de connexion prévue sur une circonférence parallèle au canal annulaire ; et
un canal de détecteur (1033) configuré de manière à communiquer avec le canal de séparation centrifuge (1032a, 1032b, 2032, 3032, 3032a, 3032b) sur toute la direction azimutale au moyen d'une unité de connexion prévue sur une circonférence parallèle au canal de séparation centrifuge (1032a, 1032b, 2032, 3032, 3032a, 3032b), le détecteur (1043) étant prévu en une position qui passe par l'axe central,
dans lequel l'appareil de mesure de fluide (100, 100a, 100b, 100c, 200, 300, 300a) est configuré de telle sorte qu'une partie du fluide s'écoule de façon séquentielle au travers de l'unité d'admission et de décharge (1031), du canal de séparation centrifuge (1032a, 1032b, 2032, 3032, 3032a, 3032b), du canal de détecteur (1033), du canal de séparation centrifuge (1032a, 1032b, 2032, 3032, 3032a, 3032b) et de l'unité d'admission et de décharge (1031).

2. Appareil de mesure de fluide (100, 100a, 100b, 100c, 200, 300, 300a) selon la revendication 1, dans lequel le canal de détecteur (103) communique avec le canal de séparation centrifuge (1032a, 1032b, 2032, 3032, 3032a, 3032b) dans une surface intérieure qui est une surface située d'un côté de l'axe central de surfaces constituant le canal de séparation centrifuge (1032a, 1032b, 2032, 3032, 3032a, 3032b).

3. Appareil de mesure de fluide selon la revendication 1 ou 2, dans lequel l'unité d'admission et de décharge (1031) est prévue dans une surface extérieure qui est une surface opposée par rapport à l'axe central des surfaces constituant le canal de séparation centrifuge (1032a, 1032b, 2032, 3032, 3032a, 3032b).

4. Appareil de mesure de fluide (100, 100a, 100b, 100c, 200, 300, 300a) selon l'une quelconque des revendications 1 à 3, dans lequel le détecteur (1043) comprend deux unités d'éléments de détection (1043a, 1043b) configurées de manière à détecter la vitesse de fluide dans une direction uni-axiale, les deux unités d'éléments de détection (1043a, 1043b) sont agencées de telle sorte que des axes sur chacun desquels la vitesse de fluide dans la direction uni-axiale est détectée soient orthogonaux l'un à l'autre, et les deux unités élémentaires de détection (1043a, 1043b) sont opposées l'une à l'autre dans une direction perpendiculaire à une direction du canal de détecteur (1033).

5. Appareil de mesure de fluide (100, 100a, 100b, 100c, 200, 300, 300a) selon l'une quelconque des revendications 1 à 3, dans lequel le détecteur (1043) comprend deux unités d'éléments de détection (1043a, 1043b) configurées de manière à détecter la vitesse de fluide dans une direction uni-axiale, les deux unités d'éléments de détection (1043a, 1043b) sont agencées de telle sorte que des axes sur chacun desquels la vitesse de fluide dans la direction uni-axiale est détectée soient orthogonaux l'un à l'autre, et les deux unités d'éléments de détection (1043a, 1043b) sont situées sur un côté identique par rapport au canal de détecteur (1033) tout en étant adjacentes l'une à l'autre dans une direction du canal de détecteur (1033).

6. Appareil de mesure de fluide (100, 100a, 100b, 100c, 300a) selon l'une quelconque des revendications 1 à 5, dans lequel le canal de séparation centrifuge (1032a, 1032b, 3032a, 3032b) comprend une pluralité de canaux annulaires (1032a, 1032b, 3032a, 3032b) qui présentent des rayons différents les uns des autres.

7. Appareil de mesure de fluide (100, 100a, 100b, 100c, 200, 300, 300a) selon l'une quelconque des revendications 1 à 6, dans lequel un étranglement est prévu dans le canal de détecteur (1033) afin de réduire une aire en coupe transversale du canal de détecteur (1033) à la position au niveau de laquelle le fluide entre en contact avec le détecteur (1043) par comparaison avec des aires en coupe transversale du canal de détecteur (1033) au niveau d'autres positions.

8. Appareil de mesure de fluide (100, 100a, 100b, 100c, 200, 300, 300a) selon l'une quelconque des revendications 1 à 7, dans lequel l'unité d'admission et de décharge (1031) communique avec le canal de séparation centrifuge (1032a, 1032b, 2032, 3032, 3032a, 3032b) dans une région centrale dans la direction d'axe central dans la surface extérieure qui est la surface opposée par rapport à l'axe central des surfaces constituant le canal de séparation centrifuge (1032a, 1032b, 2032, 3032, 3032a, 3032b).

9. Appareil de mesure de fluide (100b) selon l'une quelconque des revendications 1 à 8, dans lequel au moins l'une de parties de coin (1135) sur le profil de l'unité de connexion au niveau de laquelle les différents canaux (1032a, 1032b) communiquent l'un avec l'autre ou les uns avec les autres est chanfreinée ou arrondie selon une forme incurvée dans une section plane comprenant l'axe central.

10. Appareil de mesure de fluide (100, 100a, 100b, 100c, 200, 300, 300a) selon l'une quelconque des revendications 1 à 9, comprenant en outre une unité arithmétique (1042) configurée de manière à acquérir des données de la vitesse de fluide et de la direction de fluide en provenance du détecteur (1043), à effectuer une opération sur les données et à émettre en sortie la vitesse de fluide et la direction de fluide dans un environnement externe.

11. Appareil de mesure de fluide (100, 100a, 100b, 100c, 200, 300, 300a) selon la revendication 10, comprenant en outre un détecteur d'azimut (1045) configuré de manière à détecter un azimut absolu, dans lequel l'unité arithmétique (1042) émet en sortie une direction basée sur l'azimut absolu en tant que direction de fluide dans un environnement externe sur la base de l'azimut absolu détecté par le détecteur d'azimut (1045) et de la direction de fluide détectée par le détecteur (1043).

12. Appareil de mesure de fluide (100, 100a, 100b, 100c, 200, 300, 300a) selon la revendication 10 ou 11, comprenant en outre au moins un détecteur pris parmi un détecteur de température (1044) configuré de manière à détecter une température du fluide et un détecteur d'humidité (1044) configuré de manière à détecter l'humidité du fluide,
dans lequel l'unité arithmétique (1042) effectue une opération sur la base d'au moins un élément parmi des éléments de données constitués par la température et l'humidité détectées et des éléments de données constitués par la vitesse de fluide et la direction de fluide, et émet en sortie des données d'indice d'un état environnemental.
